# EUROPÄISCHE PATENTSCHRIFT

(11) **EP 3 146 017 B1**
(45) Veröffentlichungstag und Bekanntmachung des Hinweises auf die Patenterteilung: **21.03.2018**
(21) Anmeldenummer: 15722992.3
(22) Anmeldetag: 07.05.2015
(51) Int. Cl.: C10B 27/06, F16K 41/10, F16K 1/12

(54) **STELLVORRICHTUNG ZUR BETÄTIGUNG EINES ELEMENTES INNERHALB EINES VON KOKSOFENGAS DURCHSTRÖMTEN GASRAUMES UND VERFAHREN ZUM BETREIBEN DER STELLVORRICHTUNG**
ADJUSTING DEVICE FOR ACTUATING AN ELEMENT WITHIN A GAS CHAMBER THROUGH WHICH A COKE OVEN GAS FLOWS, AND METHOD FOR OPERATING THE ADJUSTING DEVICE
DISPOSITIF DE COMMANDE PERMETTANT D'ACTIONNER UN ÉLÉMENT À L'INTÉRIEUR D'UN COMPARTIMENT À GAZ TRAVERSÉ PAR LE GAZ D'UN FOUR À COKE, ET PROCÉDÉ PERMETTANT DE FAIRE FONCTIONNER LE DISPOSITIF DE COMMANDE

(30) Priorität: 21.05.2014 DE 102014107174
(43) Veröffentlichungstag der Anmeldung: 29.03.2017
(73) Patentinhaber: ThyssenKrupp Industrial Solutions AG, 45143 Essen (DE); thyssenkrupp AG, 45143 Essen (DE)
(72) Erfinder: DIEPHAUS, Matthias, 44795 Bochum (DE); HEGNER, Fabian, 46236 Bottrop (DE); ÜBERSCHÄR, Kerstin, 44799 Bochum (DE); WIENEKAMP, Dirk, 59379 Selm (DE)
(74) Vertreter: thyssenkrupp Intellectual Property GmbH
(86) Internationale Anmeldenummer: PCT/EP2015/060064
(87) Internationale Veröffentlichungsnummer: WO 2015/176967

(56) Entgegenhaltungen:
- WO-A1-2004/109170
- DE-C2- 10 107 982

## Beschreibung

Die Erfindung betrifft eine Stellvorrichtung zur Betätigung eines Elementes innerhalb eines von Koksofengas durchströmten Gasraumes mit einer an das Element anschließbaren Stellstange, die innerhalb eines Rohgaskrümmers anordenbar bzw. angeordnet ist und durch eine Öffnung nach außen führbar bzw. geführt ist, einer Zylinder/Kolbenanordnung zur Erzeugung axialer Stellbewegungen der Stellstange und einer Einrichtung zur Abdichtung der durch die Öffnung führbaren bzw. geführten Stellstange.

Eine Vorrichtung des beschriebenen Aufbaus und mit der angegebenen Zweckbestimmung ist aus DE 101 07 982 C1 bekannt. Die Stellstange ist mit einem Element verbunden, das einer Abflussöffnung an der Unterseite einer in den Gasraum angeordneten Tauchtasse als Verschluss-/Regelelement zugeordnet ist. An den Rohgaskrümmer schließt ein Gasrohr an, welches in die Tauchtasse eintaucht und an seinem freien Ende schlitzförmige Öffnungen aufweist. Durch Auf- und Zubewegungen des Verschluss-/Regelelementes kann der Flüssigkeitsspiegel in der Tauchtasse eingestellt und der freie Öffnungsquerschnitt der schlitzförmigen Öffnungen verändert werden. Dadurch kann der Gasmengenstrom durch den Rohgaskrümmer und der Druck in einer Verkokungskammer, die über den Rohgaskrümmer mit der Gasvorlage verbunden ist, geregelt werden. Die Stellstange zur Betätigung des Verschluss-/Regelelementes ist durch eine mantelseitige Öffnung des Rohgaskrümmers nach außen geführt und an eine Zylinder/Kolbenanordnung angeschlossen. Zur Vermeidung von Rohgasemissionen ist eine Abdichtung zwischen der Stellstange und der durch die Öffnung geführten Stellstange notwendig. Zur Abdichtung macht die Druckschrift keine näheren Angaben. Stopfbuchsdichtungen und Dichtungsanordnungen mit einer oder mehreren Dichtungen, die in der Praxis zur Abdichtung axial verstellbarer Wellen und Stangen gebräuchlich sind, unterliegen einem Verschleiß. Problematisch sind vor allem die hohen Temperaturen des Rohgases und mitgeführten Verunreinigungen in Form von Teer, Kohlenstaub und Kokspartikeln, die in den Bereich der Dichtung gelangen und die Funktion der Stangendurchführung beeinträchtigen.

Aus DE 197 48 692 C1 ist für die vorgenannte Anwendung eine Einrichtung zur Abdichtung einer durch eine Öffnung geführten Stellstange bekannt, die auf dem Prinzip eines hydraulischen Verschlusses beruht. Die Dichtungsanordnung umfasst eine mit Flüssigkeit gefüllte Tauchtasse sowie ein Tauchrohr, welches unabhängig vom Stellweg der Stellstange stets in das Flüssigkeitsbad innerhalb der Tauchtasse eintaucht. Die Tauchtasse der Dichtungsanordnung wird ständig mit Flüssigkeit beaufschlagt, wobei überschüssige Flüssigkeit als Überlauf oder durch einen bodenseitigen Ablauf abfließt. Die auf einem hydraulischen Prinzip beruhende Abdichtung befindet sich direkt im Strömungsbereich des mit Teer sowie Kohlenstaub und Kokspartikeln verunreinigten Rohgases, mit der Folge, dass sich Verunreinigungen ablagern und in das Flüssigkeitsbad der Tauchtasse gelangen. Es ist ein erheblicher Verbrauch an Flüssigkeit notwendig, um eine ordnungsgemäße Funktion des auf einem hydraulischen Verschluss basierenden Dichtungsprinzips aufrechtzuerhalten.

WO 2004/109170 A1 beschreibt eine Stellvorrichtung mit einer Stellstange.

Vor diesem Hintergrund liegt der Erfindung die Aufgabe zugrunde, bei einer Stellvorrichtung für die vorgenannte Anwendung eine wirksame Abdichtung der aus dem Rohgaskrümmer nach außen geführten Stellstange anzugeben, die unanfällig ist gegen Verschmutzungen durch Verunreinigungen, die im Rohgas mitgeführt werden, und verschleißarm arbeitet. Im Vergleich zu einer Abdichtung, die auf dem Prinzip einer hydraulischen Tauchung basiert, soll der Verbrauch an Betriebsmitteln deutlich reduziert werden.

Gegenstand der Erfindung und Lösung dieser Aufgabe ist eine Stellvorrichtung nach Anspruch 1.

Erfindungsgemäß weist die Einrichtung zur Abdichtung der Stellstange eine an der Außenseite des Rohgaskrümmers anordenbare bzw. angeordnete und in der Länge flexible Dichtungsmanschette sowie eine Zuleitung zur Einleitung eines Sperrmediums in den Innenraum der Dichtungsmanschette auf. Die Dichtungsmanschette ist an ihrem einen Ende ortsfest anordenbar bzw. angeordnet und umschließt einen Spalt zwischen der Stellstange und der Öffnung für die Stangendurchführung. An ihrem anderen Ende ist die Dichtungsmanschette mit der Stellstange gasdicht verbunden. Die Dichtungsmanschette ist außerhalb des Rohgaskrümmers angeordnet und der Strömung des heißen Rohgases nicht unmittelbar ausgesetzt. Die Dichtungsmanschette ist in der Länge veränderbar und gleicht durch eine Längenänderung den Stellweg der Stellstange aus. Der Innenraum der Dichtungsmanschette ist gegenüber der Umgebung an der Außenseite des Rohgaskrümmers gasdicht getrennt, so dass keine Rohgasemission nach außen austreten kann. Der von einem Sperrmedium beaufschlagte Innenraum der Dichtungsmanschette steht unter einem Druck, der größer ist als der Betriebsdruck innerhalb des Rohgaskrümmers. Entsprechend herrscht in dem Ringspalt zwischen der Stellstange und der Öffnung, durch die die Stellstange geführt ist, ein Überdruck, der das Eintreten von Rohgas und von Verunreinigungen in den Innenraum der Dichtungsmanschette verhindert. Ferner wird der Ringspalt zwischen der Stellstange und der zugeordneten Öffnung durch das Sperrmedium gespült, welches aus dem Innenraum der Dichtungsmanschette in den Strömungsraum des Rohgaskrümmers gelangt.

Das Sperrmedium kann flüssig oder gasförmig sein. Bevorzugt ist die Verwendung eines gasförmigen Sperrmediums, beispielsweise Stickstoff. Ein geringer Überdruck innerhalb der Dichtungsmanschette ist ausreichend, um die Funktion der Dichtungsanordnung sicherzustellen. Der Überdruck ist so zu wählen, dass das in den Rohgaskrümmer einströmende Sperrmedium etwaige Druckmessungen innerhalb des Rohgaskrümmers nicht verfälscht.

Da die Dichtungsmanschette an der Außenseite des Rohrkrümmers angeordnet ist, ist die Dichtungsmanschette keinen besonderen Temperaturbelastungen ausgesetzt, so dass die Dichtungsmanschette aus gängigen Kunststoffen gefertigt werden kann. Vorzugsweise ist die Dichtungsmanschette als Faltenbalg ausgebildet.

Die Zuleitung für das Sperrmedium kann an einen Adapter angeschlossen sein, welcher die Stellstange mit einem Spalt umgibt. Das ortsfest angeordnete Ende der Dichtungsmanschette ist zweckmäßig mit dem Adapter verbunden. Eine weitere vorteilhafte Ausgestaltung sieht vor, dass der Adapter an einem Deckel befestigt ist, mit dem eine Revisionsöffnung des Rohgaskrümmers verschließbar ist.

Die Stellstange und das Ende einer Kolbenstange der Zylinder/Kolbenanordnung sind durch eine Kupplung verbunden, die als Schnellspannkupplung ausgebildet sein kann. Zweckmäßig ist die Dichtungsmanschette mit einem Anschlussende der Kupplung verbunden.

Ein weiterer vorteilhafter Aspekt der Erfindung sieht vor, dass als Sperrmedium ein vorgewärmtes Gas oder eine vorgewärmte Flüssigkeit verwendet wird. Als gasförmiges Sperrmedium wird vorzugsweise Stickstoff verwendet. Durch die Vorwärmung des Sperrmediums kann verhindert werden, dass sich die Stellstange durch Wärmeleitung abkühlt und Verunreinigungen des Rohgases als Kondensat abgeschieden werden. Zweckmäßig wird das Sperrmedium vor der Einleitung in den Innenraum der Dichtungsmanschette durch Wärmeaustausch mit einem durch den Rohgaskrümmer strömenden Rohgasstrom vorgewärmt. Eine Vorwärmung auf ca. 70 bis 90° C ist ausreichend, um ein Auskondensieren von Teer aus dem Rohgasstrom zu vermeiden.

Im Folgenden wird die Erfindung anhand einer lediglich ein Ausführungsbeispiel darstellenden Zeichnung erläutert. Es zeigen schematisch
- Fig. 1: eine Stellvorrichtung zur Betätigung eines Verschluss-/Regelelementes innerhalb eines von einem Koksofengas durchströmten Gasraumes,
- Fig. 2: eine andere Funktionsstellung der in Fig. 1 dargestellten Vorrichtung.
- Fig. 3: das Detail A aus Fig. 1.

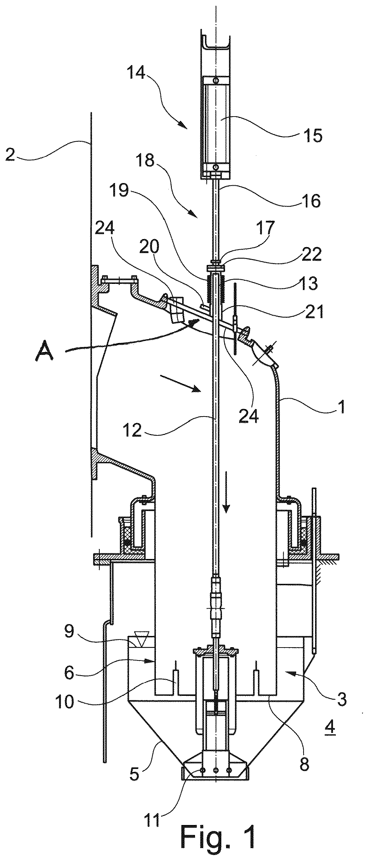

In Fig. 1 ist ein Rohgaskrümmer 1 dargestellt, der an seinem oberen Ende an eine nur angedeutete Steigleitung 2 angeschlossen ist und von einem aus einer Koksofenkammer abgezogenen Rohgas in der angegebenen Strömungsrichtung durchströmt wird. Die Gasströmung ist mittels einer Drosselvorrichtung 3 einstellbar und veränderbar. Die Drosselvorrichtung 3 ist innerhalb eines von Koksofengas durchströmten Gasraumes 4 angeordnet und über den Rohgaskrümmer 1 und die Steigleitung 2 mit dem Gassammelraum einer Verkokungskammer verbunden. Bei dem Gasraum 4 kann es sich insbesondere um eine Gasvorlage eines mehrere Koksofenkammern umfassenden Koksofens oder einen an die Gasvorlage anschließenden Strömungsraum handeln. Zum grundsätzlichen Aufbau der Drosselvorrichtung 3 gehören eine Tauchtasse 5, der ständig Wasser zugeführt wird, sowie ein Tauchrohr 6, das mit dem Rohgaskrümmer 1 verbunden ist und in der Tauchtasse 5 endet. Die Tauchtasse 5 weist einen Wasserüberlauf sowie einen verschließbaren Ablauf 7 auf. Das Tauchrohr 6 ist mit einem Endabschnitt 8 ausgebildet, dessen freier Gasaustrittsquerschnitt abhängig ist von dem Flüssigkeitsspiegel 9 in der Tauchtasse 5. Im Ausführungsbeispiel weist der Endabschnitt 8 mantelseitige Schlitze 10 auf.

Zum Verschließen des an der Unterseite der Tauchtasse 5 angeordneten Ablaufs 7 ist ein Element 11 als Verschluss-/Regelelement vorgesehen, welches an einer Stellstange 12 angeschlossen ist. Die Stellstange 12 ist innerhalb des Rohgaskrümmers 1 angeordnet und durch eine Öffnung 13 nach außen geführt. Zur Betätigung der Stellstange 12 ist eine Zylinder/Kolbenanordnung 14 vorgesehen, die einen Regelzylinder 15 sowie einen Kolben mit einer Kolbenstange 16 aufweist. Die Kolbenstange 16 und die Stellstange 12 sind außerhalb des Rohgaskrümmers 1 durch eine Kupplung 17 verbunden, die als Schnellspannkupplung ausgeführt sein kann.

Zur Vermeidung von Rohgasemissionen ist eine Einrichtung 18 zur Abdichtung der durch die Öffnung geführten Stellstange vorgesehen. Diese Einrichtung 18 umfasst eine an der Außenseite des Rohgaskrümmers 1 angeordnete und in der Länge flexible Dichtungsmanschette 19 sowie eine Zuleitung 20 zur Einleitung eines gasförmigen Sperrmediums in den Innenraum der Dichtungsmanschette 19. Die Dichtungsmanschette 19 ist an ihrem einen Ende 21 ortsfest angeordnet und umschließt einen Spalt zwischen der Stellstange 12 und der Öffnung 13. An ihrem anderen Ende 22 ist die Dichtungsmanschette 19 mit der Stellstange 12 gasdicht verbunden.

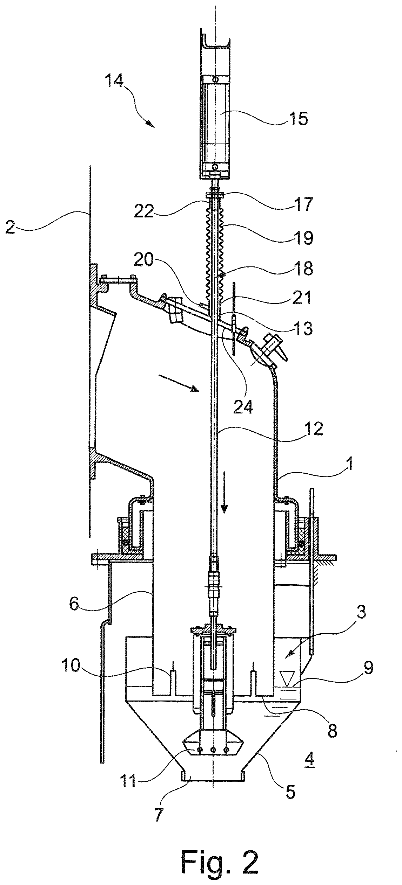

Die Dichtungsmanschette 19 ist als Faltenbalg ausgebildet, der einen Stellweg der Stellstange zwischen der in Fig. 1 dargestellten ersten Position und einer in der Fig. 2 dargestellten zweiten Position durch Längenänderung ausgleicht. Der von einem gasförmigen oder flüssigen Sperrmedium beaufschlagte Innenraum der Dichtungsmanschette 19 steht unter einem etwas höheren Druck als der Betriebsdruck innerhalb des Rohgaskrümmers 1, so dass aufgrund der Druckdifferenz kein Rohgas in den Innenraum des Faltenbalgs gelangt. Ferner wird der Ringspalt zwischen der Stellstange 12 und der Öffnung 13, durch die die Stellstange nach außen geführt ist, mit dem Sperrmedium gespült, welches in den Innenraum des Rohgaskrümmers 1 eintritt und den Ringspalt von Ablagerungen freihält.

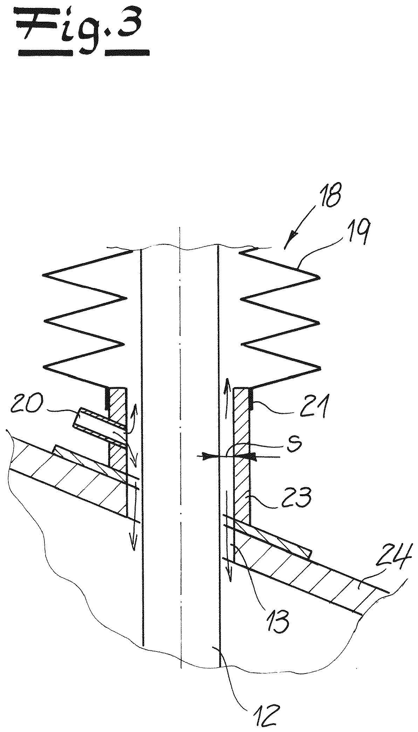

Dem in den Figuren dargestellten Ausführungsbeispiel ist zu entnehmen, dass die Zuleitung 20 für das Sperrmedium an einen Adapter 23 angeschlossen ist, welcher die Stellstange 12 mit einem Spalt s umgibt und an dem das ortsfest angeordnete Ende der Dichtungsmanschette 19 fest und gasdicht angeschlossen ist (Fig. 3). Der Adapter 23 ist an einem Deckel 24 befestigt, mit dem eine Revisionsöffnung des Rohgaskrümmers 1 verschließbar ist.

Als Sperrmedium wird vorzugsweise ein vorgewärmtes Gas verwendet, wobei das Gas Stickstoff oder ein anderes Inertgas sein kann. Durch eine Vorwärmung des Sperrmediums wird verhindert, dass sich die Stellstange 12 durch Wärmeleitung abkühlt und an der Oberfläche der Stellstange 12 Kondensate bilden. Durch eine Erwärmung des Sperrmediums auf 70 bis 90° C kann ein Auskondensieren von Teer wirksam verhindert werden. Zweckmäßig wird das Sperrmedium vor der Einleitung in den Innenraum der Dichtungsmanschette 19 durch Wärmeaustausch mit dem durch den Rohgaskrümmer 1 strömenden Rohgas auf etwa 70 bis 90° C vorgewärmt.

## Patentansprüche

1. Stellvorrichtung zur Betätigung eines Elementes innerhalb eines von Koksofengas durchströmten Gasraumes, mit
einer an das Element (11) anschließbaren Stellstange (12), die innerhalb eines Rohgaskrümmers (1) anordenbar ist und durch eine Öffnung (13) nach außen führbar ist,
einer Zylinder/Kolbenanordnung (14) zur Erzeugung axialer Stellbewegungen der Stellstange (12) und
einer Einrichtung (18) zur Abdichtung der durch die Öffnung (13) führbaren Stellstange (12),
**dadurch gekennzeichnet, dass** die Einrichtung (18) zur Abdichtung der Stellstange (12) eine an der Außenseite des Rohgaskrümmers (1) anordenbare und in der Länge flexible Dichtungsmanschette (19) sowie eine Zuleitung (20) zur Einleitung eines Sperrmediums in den Innenraum der Dichtungsmanschette (19) aufweist, wobei die Dichtungsmanschette (19) an ihrem einen Ende (21) ortsfest anordenbar ist und einen Spalt zwischen der Stellstange (12) und der Öffnung (13) umschließt und wobei die Dichtungsmanschette (19) an Ihrem anderen Ende (22) mit der Stellstange (12) gasdicht verbunden ist.

2. Stellvorrichtung nach Anspruch 1, **dadurch gekennzeichnet, dass** die Dichtungsmanschette (19) als Faltenbalg ausgebildet ist.

3. Stellvorrichtung nach Anspruch 1 oder 2, **dadurch gekennzeichnet, dass** die Zuleitung (20) an einen Adapter (23) angeschlossen ist, welcher die Stellstange (12) mit einem Spalt (s) umgibt, und dass das ortsfest angeordnete Ende (22) der Dichtungsmanschette (19) mit dem Adapter (23) verbunden ist.

4. Stellvorrichtung nach Anspruch 3, **dadurch gekennzeichnet, dass** der Adapter (23) an einem Deckel (24) befestigt ist, mit dem eine Revisionsöffnung des Rohgaskrümmers (1) verschließbar ist.

5. Stellvorrichtung nach einem der Ansprüche 1 bis 4, **dadurch gekennzeichnet, dass** die Stellstange (12) und das Ende einer Kolbenstange (16) der Zylinder/Kolbenanordnung (14) durch eine Kupplung (17) verbunden sind.

6. Stellvorrichtung nach Anspruch 5, **dadurch gekennzeichnet, dass** die Dichtungsmanschette (19) mit einem Anschlussende der Kupplung (17) verbunden ist.

7. Verfahren zum Betreiben der Stellvorrichtung nach einem der Ansprüche 1 bis 6, wobei als Sperrmedium ein vorgewärmtes Gas oder eine vorgewärmte Flüssigkeit verwendet wird.

8. Verfahren nach Anspruch 7, wobei als Sperrmedium Stickstoff verwendet wird.

9. Verfahren nach Anspruch 7 oder 8, wobei das Sperrmedium vor der Einleitung in den Innenraum der Dichtungsmanschette durch einen Wärmeaustausch mit einem durch den Rohgaskrümmer strömenden Rohgasstrom vorgewärmt wird.

## Claims

1. Actuating device for operating an element inside a gas chamber through which flows coke-oven gas, with
an actuating rod (12) which can be connected to the element (11) and can be arranged inside a raw gas manifold (1) and can be guided to the outside through an opening (13),
a cylinder/piston arrangement (14) for creating axial actuating movements of the actuating rod (12) and
a device (18) for sealing the actuating rod (12) which can be guided through the opening (13),
**characterized in that** the device (18) for sealing the actuating rod (12) has a sealing sleeve (19) which can be arranged on the outer side of the raw gas manifold (1) and is flexible in length, and also a feed line (20) for introducing a sealing medium into the interior space of the sealing sleeve (19), wherein the sealing sleeve (19) can be fixedly arranged at its one end (21) and encloses a gap between the actuating rod (12) and the opening (13) and wherein the sealing sleeve (19) at its other end (22) is connected in a gastight manner to the actuating rod (12).

2. Actuating device according to Claim 1, **characterized in that** the sealing sleeve (19) is designed as a bellows.

3. Actuating device according to Claim 1 or 2, **characterized in that** the feed line (20) is connected to an adapter (23) which encompasses the actuating rod (12) with a gap (s), and **in that** the fixedly arranged end (22) of the sealing sleeve (19) is connected to the adapter (23).

4. Actuating device according to Claim 3, **characterized in that** the adapter (23) is fastened to a cover (24) by means of which an inspection opening of the raw gas manifold (1) can be closed off.

5. Actuating device according to one of Claims 1 to 4, **characterized in that** the actuating rod (12) and the end of a piston rod (16) of the cylinder/piston arrangement (14) are connected by means of a coupling (17) .

6. Actuating device according to Claim 5, **characterized in that** the sealing sleeve (19) is connected to a connecting end of the coupling (17).

7. Method for operating the actuating device according to one of Claims 1 to 6, wherein a preheated gas or a preheated liquid is used as sealing medium.

8. Method according to Claim 7, wherein nitrogen is used as sealing medium.

9. Method according to Claim 7 or 8, wherein the sealing medium, before being introduced into the interior space of the sealing sleeve, is preheated by means of an exchange of heat with a raw gas stream flowing through the raw gas manifold.

## Revendications

1. Dispositif de réglage destiné à actionner un élément situé à l'intérieur d'un espace pour gaz traversé par du gaz de four à coke et présentant
une barre de réglage (12) qui peut être raccordée à l'élément (11), qui peut être disposée à l'intérieur d'un coude (1) à gaz brut et peut être amenée vers l'extérieur par une ouverture (13),
un ensemble (14) à cylindre et piston qui produit des déplacements axiaux de réglage de la tringle de réglage (12) et
un dispositif (18) qui assure l'étanchéité de la tringle de réglage (12) qui peut être guidée dans l'ouverture (13),
**caractérisé en ce que**
le dispositif (18) d'étanchéité de la tringle de réglage (12) présente une manchette d'étanchéité (19) flexible en longueur et apte à être disposée sur le côté extérieur du coude (1) à gaz brut, ainsi qu'une amenée (20) qui introduit un moyen de blocage dans l'espace intérieur de la manchette d'étanchéité (19), la manchette d'étanchéité (19) pouvant être immobilisée à l'une de ses extrémités (21) et entourant un interstice entre la tringle de réglage (12) et l'ouverture (13), la manchette d'étanchéité (19) étant reliée de manière étanche aux gaz à la tringle de réglage (12) par son autre extrémité (22).

2. Dispositif de réglage selon la revendication 1, **caractérisé en ce que** la manchette d'étanchéité (19) est configurée comme soufflet.

3. Dispositif de réglage selon les revendications 1 ou 2, **caractérisé en ce que** l'amenée (20) est raccordée à un adaptateur (23) qui entoure la tringle de réglage (12) avec un interstice (s) et **en ce que** l'extrémité (22) immobilisée de la manchette d'étanchéité (19) est reliée à l'adaptateur (23).

4. Dispositif de réglage selon la revendication 3, **caractérisé en ce que** l'adaptateur (23) est fixé à un couvercle (24) par lequel une ouverture d'observation du coude (1) à gaz brut peut être fermée.

5. Dispositif de réglage selon l'une des revendications 1 à 4, **caractérisé en ce que** la tringle de réglage (12) et l'extrémité d'une tige (16) de piston de l'agencement (14) à cylindre et piston sont reliées par un accouplement (17).

6. Dispositif de réglage selon la revendication 5, **caractérisé en ce que** la manchette d'étanchéité (19) est reliée à une extrémité de raccordement de l'accouplement (17).

7. Procédé de conduite du dispositif de réglage selon l'une des revendications 1 à 6, qui utilise comme fluide de blocage un gaz préchauffé ou un liquide préchauffé.

8. Procédé selon la revendication 7, qui utilise de l'azote comme fluide de blocage.

9. Procédé selon les revendications 7 ou 8, dans lequel le fluide de blocage est préchauffé par un échange de chaleur avec un écoulement de gaz brut qui s'écoule dans le coude à gaz brut avant d'être introduit dans l'espace intérieur de la manchette d'étanchéité.
